Europäisches Patentamt

European Patent Office

Office européen des brevets

(11) Veröffentlichungsnummer: **0 241 012 B1**

# (12) EUROPÄISCHE PATENTSCHRIFT

(45) Veröffentlichungstag der Patentschrift: **29.01.92**

(21) Anmeldenummer: **87105205.6**

(22) Anmeldetag: **08.04.87**

(51) Int. Cl.⁵: **B60P 3/00**

(54) **Kraftfahrzeug mit einer Ausrüstung für Entgiftungszwecke.**

(30) Priorität: **10.04.86 DE 3612130**

(43) Veröffentlichungstag der Anmeldung:
**14.10.87 Patentblatt 87/42**

(45) Bekanntmachung des Hinweises auf die
Patenterteilung:
**29.01.92 Patentblatt 92/05**

(84) Benannte Vertragsstaaten:
**AT CH DE FR GB IT LI SE**

(56) Entgegenhaltungen:
**CH-A- 450 188**
**DD-A- 56 452**
**DE-A- 2 139 189**
**GB-A- 2 158 783**
**US-A- 3 623 763**

(73) Patentinhaber: **MATRA-WERKE GMBH**
**Dieselstrasse 30-40**
**W-6000 Frankfurt/Main(DE)**

(72) Erfinder: **Fey, Hans, Dipl.-Ing.**
**Vogelsbergstrasse 11**
**W-6467 Hasselroth 1(DE)**

(74) Vertreter: **Schaefer, Gerhard, Dr.**
**Linde Akfiengesellschaft Zentrale Patentab-**
**teilung**
**W-8023 Höllriegelskreuth(DE)**

Rank Xerox (UK) Business Services

**Beschreibung**

Die Erfindung bezieht sich auf ein Kraftfahrzeug, das mit einer Sonderausrüstung für Entgiftungszwecke versehen ist, wobei am Fahrzeug mindestens eine Streueinrichtung und bzw. oder eine Sprüheinrichtung und weitere Einrichtungen zum Entgiften von Gelände oder Geräten, die während des Entgiftens an einem bestimmten Platz stehen, und Einrichtungen zum Entgiften von Personen vorgesehen ist. Die Erfindung betrifft somit auch eine transportable, verladbare Einrichtung zum Entgiften bzw. betrifft einen Sonderaufbau für ein Kraftfahrzeug, der zum Zwecke des Entgiftens dient. Bei bekannten Fahrzeugen dieser Art sind am Fahrzeug starre Streueinrichtungen für Chemikalien,beispielsweise Chlorkalk, und bzw. oder starre Sprüheinrichtungen für Wasser oder Chemikalien vorgesehen, wobei diese Einrichtungen dazu dienen, das Gelände, über das das Fahrzeug fährt, mit dem Entgiften dienenden Chemikalien und Wasser zu benetzen. Ferner ist bekannt, am Fahrzeug Wassertanks und Behälter für Chemikalien bzw. Befestigungsvorrichtungen für solche Behälter vorzusehen und gegebenenfalls Pumpen und aufrollbare Schläuche vorzusehen, die dazu dienen, abgestellte Geräte mit Chemikalien zu besprühen. Zur Reinigung der Oberfläche menschlicher Körper ist eine als Zelt gestaltete Kabine bekannt, in der Duschen angeordnet sind, wobei im Bodenbereich aus einer flexiblen Folie, deren Oberkante um annähernd horizontale Zeltstangen gelegt ist, eine Wasserauffangwanne gebildet ist, die verhindert, daß das verunreinigte, zum Duschen benutzte Wasser in das Gelände abläuft. Dabei ist es auch bekannt, Nebenzelte vorzusehen, die zum Entkleiden bzw. Ankleiden dienen (DE-A-24 49 ||9). Das Auf- und Abbauen derartiger Zelte ist sehr zeitaufwendig. Wassertanks, Behälter für Seife und Chemikalien und Einrichtungen zur Erwärmung des Duschwassers müssen getrennt neben dem Zelt aufgebaut werden und an die Dusche bzw. an die Wasserauffangwanne angeschlossen werden. Das erfordert weiteren Zeitaufwand beim Auf- und Abbau.

Ein durch zeitaufwendigen Aufbau der Duscheinrichtung verspäteter Beginn der Entgiftung hat auf deren Wirksamkeit einen nachteiligen Einfluß.

Der Erfindung liegt die Aufgabe zugrunde, die Einsatzmöglichkeiten und Einsatzbedingungen eines Kraftfahrzeuges bzw. eines Kraftfahrzeugaufbaues zu verbessern.

Diese Aufgabe wird durch die im kennzeichnenden Teil des Patentanspruches I angegebenen Merkmale gelöst. Dadurch, daß ein Aufbaukasten vorhanden ist, der alle Vorratsbehälter und Einrichtungen zur Gelände- und Geräte-Entgiftung, soweit sie nicht am Fahrzeug an sich befestigt sind, enthält und daneben auf dem gleichen Fahrzeugrahmen abnehmbar ein zweiter Aufbaukasten vorgesehen ist, sind die Einrichtungen einerseits für Gelände- und Geräte-Entgiftung, andererseits für die Personenreinigungen voneinander unabhängig. Insbesondere der Aufbaukasten mit den Einrichtungen für die Personenreinigung kann auf das Gelände abgesetzt werden und dann unabhängig vom Fahrzeug benutzt werden, während andererseits das Fahrzeug mit allen Einrichtungen für die Gelände- und Geräte-Entgiftung unabhängig von den Einrichtungen für die Personenreinigung jederzeit einsatzfähig ist. Das heißt, beide Systeme, nämlich einerseits die Gelände- und Geräte-Entgiftung und andererseits die Personenreinigung, sind somit autark und können völlig unabhängig voneinander benutzt werden.

In einer zweckmäßigen Ausgestaltungsform ist auch der Aufbaukasten, der die Einrichtungen für die Geräte-Entgiftung enthält, absetzbar oder vorzugsweise sind Teile dieses Aufbaukastens oder in diesem eingebaute Teile herausnehmbar und absetzbar. Diese Teile können als mit Handtrageinrichtungen versehene Einschubbehälter, die im Aufbaukasten festlegbar sind, oder als aus diesem herausnehmbare Rollwagen gestaltet sein. Ist der Aufbaukasten als ganzes abgesetzt oder vorzugsweise, sind derartige einzelne Teile aus dem Aufbaukasten herausgenommen, kann das Fahrzeug an sich, soweit die vorhandenen Vorräte an Wasser und Chemikalien reichen, zur Entgiftung eines Geländestreifens eingesetzt werden, während von dem abgesetzten und in Benutzung genommenen Aufbaukasten bzw. den aus diesem entnommenen Teilkasten aus Geräte, die benachbart abgestellt sind oder langsam vorbeigefahren werden, entgiftet werden oder die Vorräte in diesem Aufbaukasten bzw. den herausgenommenen Teilen können ergänzt oder an diesen Teilen, beispielsweise Pumpen, Wartungsarbeiten vorgenommen werden. Sind beide Aufbaukästen auf das Fahrzeug aufgesetzt, können sie gut schnell über große Strecken transportiert werden, so daß an jeden infrage kommenden Einsatzort schnell ein Gesamtsystem verfahren werden kann, das sowohl zur Entgiftung von Gelände, als auch zur Entgiftung von Geräten, als auch zur Entgiftungsreinigung von Personen dient. Vorzugsweise ist jedoch der erste Aufbaukasten fest mit dem Fahrzeug verbunden.

Eine besonders zweckmäßige Ausgestaltungsform für den Aufbaukasten mit der Personenreinigungsanlage ist im Anspruch 3 angegeben.

Ein Ausführungsbeispiel des Erfindungsgegenstandes ist in der Zeichnung dargestellt.

Figur I zeigt eine Seitenansicht des Fahrzeuges mit beiden aufgesetzten Aufbaukasten.

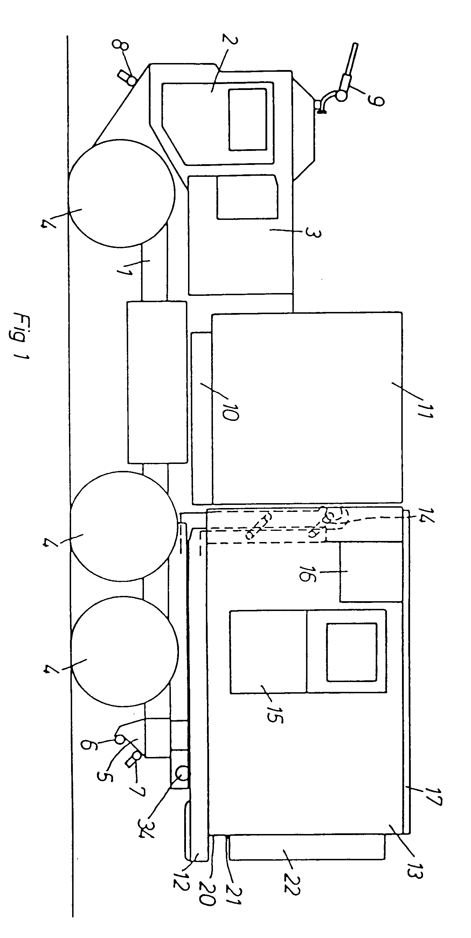

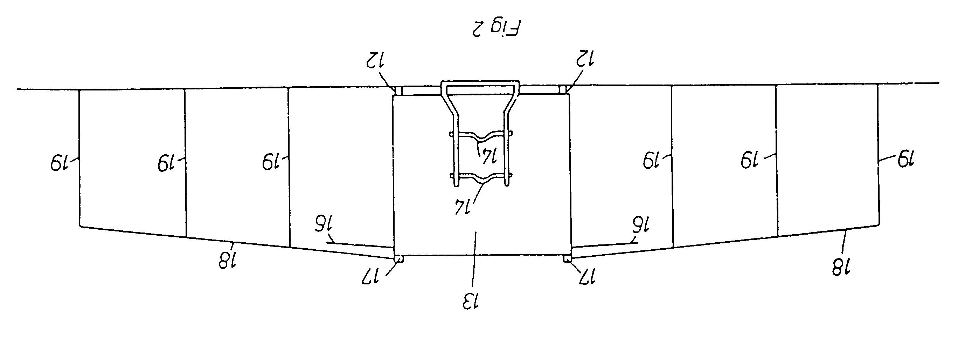

Figur 2    zeigt eine Vorderansicht des abgesetzten Aufbaukastens für die Personenreinigung.

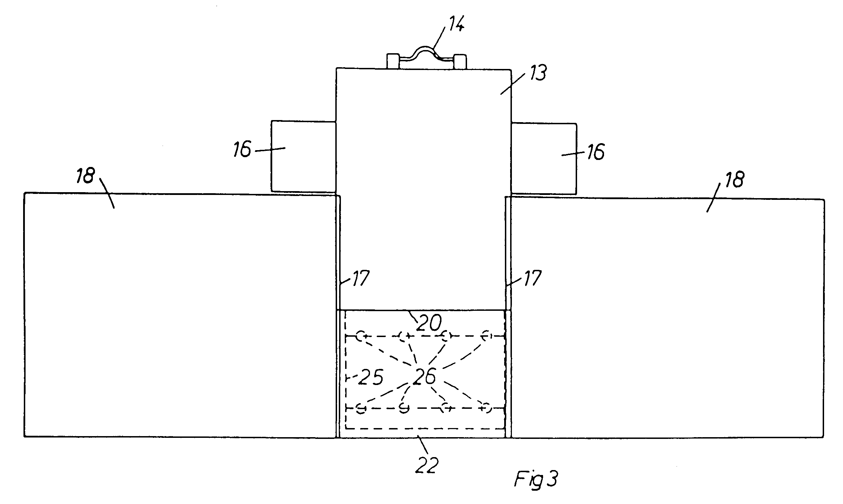

Figur 3    zeigt eine Draufsicht auf die Einrichtung gemäß Figur 2.

Figur 4    zeigt eine Seitenansicht des abgesetzten Aufbaukastens für die Personenreinigung mit ausgefahrener Duscheinrichtung und

Figur 5    zeigt das Heckteil des Aufbaukastens gemäß Figur 2 mit für den Transport angeklappter Duscheinrichtung.

Das Fahrzeug weist einen Rahmen I, ein Fahrerhaus 2, einen Motor- und Betriebsmittelraum 3 und sechs Fahrzeugräder 4 auf. Am Heckteil des Rahmens I ist eine Streuvorrichtung für Chemikalien mit einem Trichterkasten 5 und einer Abstreueinrichtung 6 vorgesehen und darüber ist eine Flüssigkeitssprühvorrichtung 7 vorgesehen. Eine weitere Flüssigkeitssprühvorrichtung 8 ist am Vorderteil des Fahrzeuges vorgesehen. Oberhalb des Fahrerraumes 2 ist auf dessen Dach ein Schaumspritzmonitor 9 angeordnet.

Auf den Fahrzeugrahmen I ist mittels eines Zwischenrahmens I0 ein containerartiger Fahrzeugaufbaukastenbehälter II aufgebaut, in dessen Innerem ein Wassertank, Befestigungsvorrichtungen für Chemikalienfässer, Pumpeinrichtungen, Schläuche und sonstige Einrichtungen vorgesehen sind. Am Aufbaukasten II sind in der Zeichnung nicht mehr dargestellte Verschlußklappen, Türen und dergleichen vorgesehen, die es ermöglichen, den Aufbaukasten II zu betreten bzw. an in diesem angeordnete Vorratsbehälter heranzukommen. In an sich bekannter Weise sind am Fahrzeug Ansteckleitern oder Einschiebeleitern vorgesehen, die es ermöglichen, leicht vom Fahrbahnniveau aus zu den Türen des Kastenaufbaues II zu gelangen und zum Beispiel Chemikalien zu entnehmen und in den Aufgabetrichter 5 zu verbringen. Am Aufbaukasten II sind auch in der Zeichnung nicht mehr dargestellte Schlauchanschlüsse vorgesehen, durch die im Fahrzeugrahmen I verlaufende Rohrleitungen mit den Sprühvorrichtungen 7 und 8 verbunden sind.

Auf den Fahrzeugrahmen I ist ein weiterer Zwischenrahmen I2 abgesetzt, auf den ein zweiter Fahrzeugaufbaukasten I3 abgesetzt ist. An seiner Vorderseite weist dieser Fahrzeugaufbaukasten I3 Verbindungsmittel I4 auf, die vorgesehen sind zur Verbindung mit Einrichtungen, die dazu dienen, den Fahrzeugaufbaukasten I3 auf den Fahrzeugrahmen I zu heben oder zu ziehen. Eine Rolle 34 kann zum Verschieben des Zwischenrahmens I2 auf dem Fahrzeugrahmen I dienen.

Der Fahrzeugaufbaukasten weist an beiden Seiten je eine Türe I5 und ein hochklappbares Vorbaudach I6 auf. Auf der Dachfläche ist ein Rolladenkasten I7 befestigt, der bei dem in der Zeichnung dargestellten Ausführungsbeispiel derart befestigt ist, daß er für den Betrieb der Personenreinigungsanlage nach hinten verschoben werden kann.

Aus jedem der beiden Rolladenkasten I7 ist markisenartig eine Dachfläche I8 herausziehbar, die mittels Zeltstangen I9 abgestützt werden kann. Entlang der Außenkante der Dachfläche I8 können vertikal hängende, in der Zeichnung nicht mehr dargestellte Zeltplane gehängt werden, so daß sich unter jeder der beiden Dachflächen I8 ein zeltartig geschlossener Raum ergibt, von denen der eine zum Entkleiden und der andere zum Ankleiden dient. Bei einer anderen Ausgestaltungsform kann auch vorgesehen sein, daß aus einem einheitlichen Rolladenkasten markisenartig nach beiden Seite je eine Dachfläche herausziehbar ist.

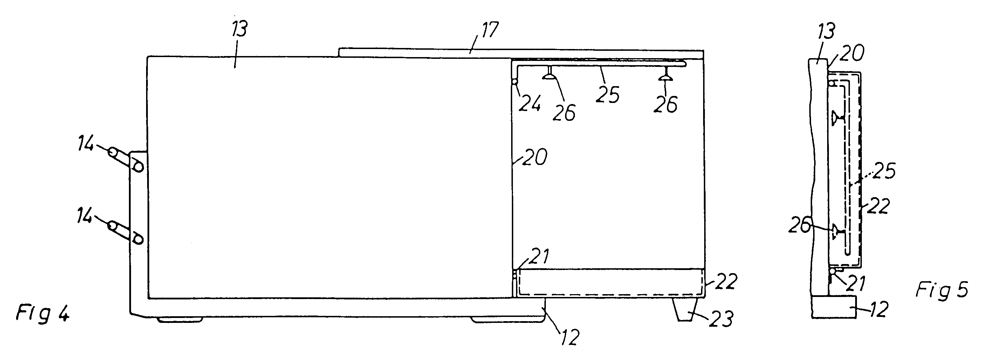

An der Heckfläche 20 des Fahrzeugaufbaukastens I3 ist mittels eines Gelenkes 2I eine Duschwasserauffangwanne 22 hochklappbar gelagert, die in dem in Figur 4 dargestellten herabgeklappten Zustand mittels Stützfüßen 23 auf dem Boden abgestützt werden kann, sich andererseits aber auch auf einem überkragenden Teil des Zwischenrahmens I2 abstützt. Durch Gelenkrohrverbindungen 24 ist mit einer im Fahrzeugkastenaufbau I3 angeordneten, in der Zeichnung nicht mehr dargestellten Rohrleitung ein Rohr 25 verbunden, an dem Duschen 26 befestigt sind. Die Beaufschlagung der Rohrleitung 25 und damit der Duschen 26 mit Wasser erfolgt über Ventile, die im Fahrzeugkasten I3 angeordnet, in der Zeichnung aber nicht mehr dargestellt sind. Im Fahrzeug aufbaukasten I3 sind weiterhin Wassertanks, mindestens eine Pumpe, gegebenenfalls Wassererwärmungseinrichtungen und dergleichen vorgesehen. In Figur 4 ist das Rohr 25 mit den Duschen 26 in dem für den Betriebszustand hochgeklappten Zustand dargestellt.

In Figur 5 ist zu erkennen, daß das Rohr 25 mit den Duschen 26 herabgeklappt werden kann und dann derart an der Heckwand 20 des Fahrzeugkastenaufbaues I3 liegt, daß die Duschwasserauffangwanne 22, das Rohr 25 mit den Duschen 26 überdeckt und schützt.

Die Rolladenkasten können auch unter der Dachfläche angeordnet in den Aufbaukasten I3 einbezogen werden.

**Patentansprüche**

1.  Kraftfahrzeug mit einer Ausrüstung für Entgiftungszwecke mit mindestens einer am Fahrzeug befestigten Streu-und/oder Sprüh-Einrichtung (5,7) und weiteren Einrichtungen zum Entgiften von zumindest während des Entgiftungsvorganges ortsfesten Teilen und mit Einrichtungen zum Entgiften von Personen,

gekennzeichnet durch folgende Merkmale:

a) alle weiteren über die am Fahrzeug befestigten Streu- (5) und/oder Sprüh (7,8) Einrichtungen hinausgehenden Einrichtungen zum Entgiften von ortsfesten Teilen sind in einem ersten Fahrzeugaufbaukasten (II) zusammengefasst angeordnet,

b) alle Einrichtungen zum Entgiften von Personen sind in einem zweiten, von dem ersten (II) getrennten Fahrzeugaufbaukasten (I3) angeordnet,

c) der zweite Fahrzeugaufbaukasten (I3) ist mittels an sich bekannter Mittel (I4, 34) absetzbar.

2. Kraftfahrzeug nach Anspruch I, dadurch gekennzeichnet, daß in den ersten Fahrzeugaufbaukasten (II) Teile einsetzbar und in diesem festlegbar sind, die herausnehmbar und getrennt transportierbar sind und Chemikalien oder Einrichtungen wie Pumpen für Entgiftung von während des Entgiftungsvorganges benachbart stehenden Geräten aufnehmen.

3. Kraftfahrzeug nach Anspruch I, dadurch gekennzeichnet, daß auch der erste Fahrzeugaufbaukasten (II) absetzbar ist, vorzugsweise zusammen mit dem zweiten Fahrzeugaufbaukasten (I3) absetzbar ist.

4. Absetzbarer, der Entgiftungsreinigung von Personen dienender Fahrzeugaufbaukasten, insbesondere für ein Kraftfahrzeug nach einem der vorangegangenen Ansprüche, gekennzeichnet durch die Kombination der folgenden Merkmale:

a) der Fahrzeugaufbaukasten (I3) ist in verladbarem Zustand ein geschlossenes Element und bildet bei aufgebauter Anlage das Zentralteil (I3) der Anlage,

b) an der Rückseite (20) des Fahrzeugaufbaukastens (I3) sind Duschen (26) mit Wasserrohren (25) herabklappbar gelagert und ist eine Duschwasserauffangwanne (22) derart gelagert, daß sie in hochgeklapptem Zustand die in herabgeklapptem Zustand befindlichen Duschen (26) übergreift,

c) an beiden Seiten des Fahrzeugaufbaukastens sind rolladenähnlich herausrollbare Teile (I8) gelagert, von denen eines im herausgerollten Zustand die Dachfläche (I8) des Entkleideraumes bildet und die zweite im herausgerollten Zustand die Dachfläche (I8) des Ankleideraumes bildet.

5. Fahrzeugaufbaukasten nach Anspruch 4, dadurch gekennzeichnet, daß auf beiden Seiten des zentralen Teiles (I3) im Bereich der Oberkante der Seitenfläche bzw. der Seitenkante der Dachfläche ein Rolladenkasten (I7) angeordnet ist.

6. Fahrzeugaufbaukasten nach Anspruch 5, dadurch gekennzeichnet, daß der Rolladenkasten (I7) bzw. die Rolladenkasten (I7) in Fahrzeuglängsrichtung verschiebbar gelagert sind.

## Claims

1. A motor vehicle with equipment for decontamination purposes, comprising at least one sprinkling and/or spraying device (5,7) attached to the vehicle, and further devices for decontaminating objects which are stationary at least during the decontamination process, and comprising devices for the decontamination of human beings, characterised by the following features:

(a) all the further devices for decontaminating stationary objects, over and above the sprinkling device (5) and/or spraying devices (7,8) attached to the vehicle, are assembled in a first vehicle body structure (11),

(b) all the devices for the decontamination of human beings are arranged in a second vehicle body structure (13) separate from the first (11),

(c) the second vehicle body structure (13) is removable by means (13,14) known per se.

2. A motor vehicle as claimed in Claim 1, characterised in that parts can be inserted and fixed in the first vehicle body structure (11), which parts are removable and separately transportable and accommodate chemicals or devices, such as pumps, for the decontamination of apparatus arranged in the vicinity during the decontamination process.

3. A motor vehicle as claimed in Claim 1, characterised in that the first vehicle body structure (11) is also removable, preferably together with the second vehicle body structure (13).

4. A removable vehicle body structure used for the decontamination cleansing of human beings, in particular for a motor vehicle as claimed in one of the preceding claims, characterised by the combination of the following features:

(a) in the loadable state the vehicle body structure (13) forms a closed element and in the assembled state represents the central part (13) of the system,

(b) on the rear side (20) of the vehicle body structure (13) shower appliances (26) with water pipes (25) are mounted so that they can be folded down, and a shower water collecting trough (22) is mounted in such manner that in the folded up state it engages over the shower appliances (26) in the folded down state,

(c) parts (18) which can be rolled out in the manner of roller blinds are mounted on both sides of the vehicle body structure, one of said parts forming, in the rolled-out state, the ceiling surface of the undressing chamber and the second of said parts forming, in the rolled-out state, the ceiling surface (18) of the dressing chamber.

5. A vehicle body structure as claimed in Claim 4, characterised in that a roller-blind container (17) is arranged on both sides of the central part (13) in the region of the upper edge of the side surface or the side edge of the ceiling surface.

6. A vehicle body structure as claimed in Claim 5, characterised in that the roller-blind container (17) or roller-blind containers (17) is/are mounted so as to be displacable in the longitudinal direction of the vehicle.

**Revendications**

1. Véhicule moteur avec un équipement à des fins de décontamination avec au moins un dispositif (5, 7) d'épandage et/ou d'arrosage fixé sur le véhicule à moteur et d'autres dispositifs, pour la décontamination de pièces fixes pendant le processus de décontamination et avec des dispositifs pour la décontamination des personnes, véhicule à moteur caractérisé par les moyens suivants:

a) tous les autres dispositifs pour la décontamination des pièces fixes partant des dispositifs d'épandage et/ou d'arrosage (7, 8) fixés sur le véhicule sont rassemblées dans une première boîte de construction (11) du véhicule,

b) tous les dispositifs pour la décontamination des personnes sont disposés dans une deuxième boîte de construction (13) distincte de la première,

c) la deuxième boîte de construction (13) peut être déposée grâce à des moyens (14, 34) connus en soi.

2. Véhicule à moteur selon la revendication 1, caractérisé en ce que dans la première boîte de construction (11) du véhicule des pièces peuvent être insérés et fixées dans celle-ci, qui peuvent être retirées et transportées séparément et recueillent des produits chimiques ou des dispositifs tels que des pompe pour la décontamination d'appareils se trouvant au voisinage pendant le processus de décontamination.

3. Véhicule à moteur selon la revendication 1, caractérisé en ce que la première boîte de construction (11) peut aussi être déposée, de préférence en même temps que la deuxième boîte de construction (13) du véhicule.

4. Boîte de construction de véhicule servant à la décontamination des personnes, en particulier pour un véhicule à moteur selon l'une des revendications précédentes, caractérisé par la combinaison des éléments caractéristiques suivantes:

a) la boîte de construction (13) du véhicule est dans sa position pouvant être chargée un élément fermé et forme, dans l'installation montée, la partie centrale (13) de l'installation,

b) sur le côté arrière (20) de la boîte de construction (13) du véhicule sont montées des douches (26) avec des tuyaux d'eau (25) dépliables et une cuvette (22) de recueil de l'eau de douche est montée de telle façon que dans sa position repliée vers le haut elle vient en prise avec les douches (26) se trouvant dans la position dépliée,

c) des deux côtés de la boîte de construction du véhicule sont montés des éléments (18) pouvant être déroulés semblables à des rideaux roulants, dont l'un dans la position déroulée forme la toiture (18) de l'espace de déshabillage et le second dans la position déroulée forme la toiture (18) de l'espace d'habillage.

5. Boîte de construction de véhicule selon la revendication 4, caractérisé en ce que des deux côtés de la partie centrale (13) est disposé dans la zone du bord supérieur de la face latérale ou du bord latéral de la toiture une boîte de rideau roulant (17).

6. Boîte de construction de véhicule selon la revendication 5, caractérisée en ce que la boîte de rideau roulant (17) ou les boîtes de rideau roulant (17) sont montées de façon à pouvoir coulisser dans le sens longitudinal du véhicule.

Fig 1

EP 0 241 012 B1

Fig 2

7

Fig 3

8

Fig 4

Fig 5